(19) Europäisches Patentamt
European Patent Office
Office européen des brevets

(11) EP 1 937 062 B1

(12) EUROPÄISCHE PATENTSCHRIFT

(45) Veröffentlichungstag und Bekanntmachung des Hinweises auf die Patenterteilung:
**21.08.2013 Patentblatt 2013/34**

(21) Anmeldenummer: **06792385.4**

(22) Anmeldetag: **06.10.2006**

(51) Int Cl.:
***A01N 31/08*** *(2006.01)* ***A01N 33/04*** *(2006.01)*
***A61L 2/18*** *(2006.01)* ***A01P 1/00*** *(2006.01)*
***C02F 1/50*** *(2006.01)*

(86) Internationale Anmeldenummer:
**PCT/EP2006/009678**

(87) Internationale Veröffentlichungsnummer:
**WO 2007/042214 (19.04.2007 Gazette 2007/16)**

# (54) WIRKSTOFFGEMISCHE AUS OPP UND AMINEN MIKROBIZIDE MITTEL

ACTIVE SUBSTANCE MIXTURES COMPRISING OPP AND AMINES, MICROBICIDAL AGENTS

MELANGE D'AGENTS ACTIFS FABRIQUES A PARTIR D'AGENTS MICROBICIDES A BASE D'O-PHENYL-PHENOL (OPP) ET D'AMINES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.10.2005 DE 102005048955**

(43) Veröffentlichungstag der Anmeldung:
**02.07.2008 Patentblatt 2008/27**

(73) Patentinhaber: **LANXESS Deutschland GmbH
51369 Leverkusen (DE)**

(72) Erfinder:
- **WACHTLER, Peter
47800 Krefeld (DE)**
- **KUGLER, Martin
42799 Leichlingen (DE)**

(56) Entgegenhaltungen:
**WO-A-03/061641** **WO-A2-01/62081**
**WO-A2-03/062149** **DE-A1- 1 928 192**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 937 062 B1

## Beschreibung

Gegenstand der vorliegenden Anmeldung sind neue biozide Wirkstoffmischungen enthaltend o-Phenylphenol und Amine, Verfahren zu deren Herstellung und deren Verwendung zum Schutz technischer Materialien und Produkte vor Befall und Zerstörung durch Mikroorganismen, sowie mikrobizide Mittel auf Basis dieser neuen Mischungen.

o-Phenylphenol (OPP) bzw. dessen Natrium- oder Kaliumsalz sind seit langem in der Praxis verwendete Wirkstoffe zur Herstellung mikrobizid wirksamer Zubereitungen und von Desinfektionsmitteln. Diese Wirkstoffe verfügen grundsätzlich über eine breite antimikrobielle Wirkung gegen Mikroorganismen wie Bakterien, Pilze oder Hefen und zeichnen sich vorteilhaft durch eine gute chemische und thermische Stabilität aus. Allerdings ist die Wirkhöhe in manchen Anwendungen aufgrund der relativ hohen Lipophilie von OPP nicht immer zufriedenstellend und infolgedessen können die erforderlichen Einsatzkonzentration in einem unter anwendungstechnischen und wirtschaftlichen Gesichtspunkten ungünstigen Bereich liegen.

Es hat in der Vergangenheit nicht an Versuchen gefehlt, die antimikrobielle Wirksamkeit von OPP durch Kombination mit weiteren Wirkstoffen zu verbessern.

So ist z.B in der EP-A 150 250 06 ein Verfahren beschrieben, in dem die Wirksamkeit von OPP durch Zumischen von MIT verbessert werden soll.

Die WO 03/061641 beschreibt eine Methode, die auf der Zugabe weiterer Wirkstoffe wie Glutaraldehyd, Adamantan oder Dodecylguanidinhydrochlorid beruht.

Wenn auch in einigen der vorbeschriebenen Fälle eine Verbesserung der mikrobiologischen Wirksamkeit beobachtet wird, so ist doch in den meisten Fällen ein erhöhter Aufwand zur Einbringung der Wirkstoffkomponenten in die zu schützenden Produkte erforderlich, da ein direktes Mischen der besonders vorteilhaft verwendbaren OPP-Salze mit den meisten anderen Bioziden wegen der chemischen Unverträglichkeit nicht ohne weiteres möglich ist, und somit eine apparativ und logistisch aufwendige getrennte Zugabe der jeweiligen Wirkstoffkomponenten erfolgen muss.

Überraschenderweise wurden nun neue Mischungen auf Basis von o-Phenylphenol (OPP) und bestimmten Aminen gefunden, die sich zum einen in vorteilhafter Weise formulieren lassen und darüber hinaus eine unerwartete synergistische Wirkung bei der Einarbeitung in durch ihren Wassergehalt mikrobiologisch anfällige technische Produkte aufweisen.

Gegenstand der vorliegenden Erfindung sind Mischungen enthaltend o-Phenylphenol und/oder dessen Natrium- oder Kaliumsalz und mindestens ein Amin der allgemeinen Formel (I)

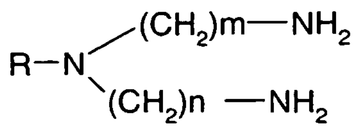

(I)

worin
R für ein geradkettiges oder verzweigtes Alkyl mit 8 bis 16 Kohlenstoffatomen steht,
m und n jeweils für eine ganze Zahl von 1 bis 11 stehen,
mit der Maßgabe, dass die Summe von n und m 4 bis 12 beträgt.

Bevorzugt sind Mischungen, die mindestens ein Amin der Formel (I) enthalten, worin
R für ein geradkettiges oder verzweigtes Alkyl mit 10 bis 14 Kohlenstoffatomen steht,
m und n jeweils für eine ganze Zahl von 1 bis 7 stehen,
mit der Maßgabe, dass die Summe von n und m 4 bis 8 beträgt.

Besonders bevorzugt sind Mischungen, die mindestens ein Amin der Formel (I) enthalten, worin
R für ein geradkettiges oder verzweigtes Alkyl mit 11 bis 12 Kohlenstoffatomen steht,
m und n jeweils für eine ganze Zahl von 1 bis 5 stehen,
mit der Maßgabe, dass die Summe von n und m 4 bis 6 beträgt.

Ganz besonders bevorzugt sind Mischungen, die ein Amin der allgemeinen Formel (I) enthalten worin R für Dodecyl steht und n und m für 3 stehen.

Die erfindungsgemäßen Mischungen weisen eine starke Wirkung gegen Mikroorganismen auf und können zum Schutz von technischen Materialien gegen Befall und Zerstörung durch Mikroorganismen eingesetzt werden.

Darüber hinaus zeichnen sich die erfindungsgemäßen Mischungen überraschend dadurch aus, dass sie in spezifischen Mischungsverhältnissen eine unerwartet hohe, synergistische Wirkungssteigerung aufweisen. Daraus folgt, dass die zum Schutz technischer Produkte im Falle der erfindungsgemäßen Mischungen benötigten Einsatzkonzentrationen, verglichen mit den nötigen Konzentrationen im Falle der jeweiligen Einzelwirkstoffe, herabgesetzt werden können. Dies ist unter ökonomischen, ökologischen und anwendungstechnischen Gesichtspunkten ausgesprochen vorteilhaft und stellt einen Beitrag zur Erhöhung der Konservierungsqualität dar.

Die erfindungsgemäßen Mischungen enthalten OPP und ein Amin der Formel (I) bevorzugt in synergistisch

wirksamen Mengen.

Die Mengen an o-Phenylphenol und/oder dessen Natrium- oder Kaliumsalz und einem Amin der allgemeinen Formel (I) in den erfindungsgemäßen Mischungen können über einen größeren Bereich variieren. Im Allgemeinen liegt das Gewichtsverhältnis von o-Phenylphenol und/oder dessen Natrium- oder Kaliumsalz zum Amin der allgemeinen Formel (I) bei 99:1 bis 1:99, bevorzugt bei 50:1 bis 1:50, besonders bevorzugt bei 10:1 bis 1:10.

Ein weiterer Aspekt der Erfindung betrifft die Tatsache, dass die Bestandteile der erfindungsgemäßen Mischungen bei Bedarf auch als fertig gemischte Zubereitungen verwendet werden können, wodurch sich diese Mischungen von vielen anderen Kombinationsprodukten bestehend aus o-Phenylphenol und/oder dessen Natrium- oder Kaliumsalz und einer zweiten bioziden Komponente vorteilhaft abheben.

Bevorzugt eignen sich die erfindungsgemäßen Wirkstoffmischungen zum Konservieren von funktionellen Flüssigkeiten und wasserhaltigen technischen Produkten, die anfällig sind gegen den Befall durch Mikroorganismen.

Beispielhaft, jedoch ohne zu limitieren, sei die Verwendung in folgenden technischen Materialien und Produkten genannt:

- Bauchemische Produkte wie Betonadditive beispielsweise auf Basis von Melasse, Ligninsulfonaten oder Polyacrylaten;Bitumenemulsionen oder Fugendichtungsmassen
- Druckverdickungsmittel auf Basis natürlicher Rohstoffe wie Alginaten, Guarmehlen, Gummiarabicum, Mais-,Weizen- oder Reisstärken
- Hilfsmittel für die Leder-,Textil- oder fotochemische Industrie
- Kühlschmierstoffkonzentrate und/oder deren wässrige Emulsionen oder Verdünnungen zur Metallverarbeitung auf Basis von Mineralöl-haltigen, halbsynthetischen oder synthetischen Konzentraten
- Leime und Klebstoffe auf Basis der bekannten tierischen, pflanzlichen oder synthetischen Rohstoffe
- Stärke-lösungen oder -slurrys
- Slurrys anderer Rohstoffe wie Farbpigmente (z.B. Eisenoxidpigmente, Rußpigmente, Titandioxidpigmente) oder Slurrys von Füllstoffen und Streichpigmenten wie Kaolin, Calciumcarbonat, Titandioxid oder Talkum
- Tinten oder Tuschen
- Wachs- und Tonemulsionen

Die erfindungsgemäßen Mischungen können zusätzlich einen oder mehrere andere biozide Wirkstoffe enthalten oder es kann beim Einsatz der erfindungsgemäßen Mischungen einer oder meherere der nachfolgend genannten bioziden Wirkstoffe separat zugegeben werden. Als bevorzugte Mischungspartner seien die folgenden Verbindungen genannt:

1,2-Benzisothiazol-3(2H)-on

1,2-Dibromo-2 4-dicyanobutan (Tektamer 38)

2,2-Dibromo-3-nitrilopropionamid (DBNPA)

2-Bromo-2-nitropropan-1 3-diol (Bronopol)

5-Chloro-2-methyl-4-isothiazolin-3-on / 2-Methyl-4-isothiazolin-3-on (CMIT/MIT)

Benzylalkohol

Bromochlorodimethylhydantoin

Diazolidinylharnstoff

Dichlorbenzylalkohol

Di-decyl-di-methyl-ammoniumchlorid

3,3-Dimethylol-5,5-dimethylhydantoin

Ethylenglykolhemiformal

Ethylenglykol-bis-hemiformal

Imidazolidinylharnstoff

2-Methyl-4-isothiazolin-3-on

Phenoxyethanol

Phenyl-ethyl-alkohol

Poly(hexamethylenebiguanide) hydrochloride

Tetramethylolacetylendiharnstoff (TMAD)

Tetrakis (hydroxymethyl) phosphonium sulphate (THPS)

Die erfindungsgemäßen Mischungen werden im Materialschutz zum Schutz technischer Materialien, insbesondere zum Schutz von wässrigen funktionellen Flüssigkeiten und wasserhaltigen technischen Produkten verwendet.

Sie sind wirksam gegen Mikroorganismen der verschiedensten Art, wie z.B. Bakterien, Schimmelpilze, Hefen sowie Schleimorganismen.

Beispielhaft, jedoch ohne zu limitieren seien die folgenden Arten genannt:

**Bakterien:**

Alcaligenes wie Alcaligenes faecalis, Bacillus wie Bacillus subtilis, Escherichia wie Escherichia coli. Proteus wie Proteus vulgaris, Pseudomonas wie Pseudomonas aeruginosa oder Pseudomonas fluorescens, Staphylococcus wie Staphylococcus aureus.

**Hefen:**

Candida wie Candida albicans, Geotrichum wie Geotrichum candidum, Rhodotorula wie Rhodotorula rubra, Saccharomyces wie Saccharomyces cerevisiae.

**Pilze:**

Alternaria wie Alternaria tenuis, Aspergillus wie Aspergillus niger, Chaetomium wie Chaetomium globosum, Fusarium wie Fusarium solani, Lentinus wie Lentinus tigrinus, Paecilomyces wie Paecilomyces variotti, Penicillium wie Penicillium glaucum.

Die erfindungsgemäßen Mischungen können hergestellt werden, indem man die Einzelkomponenten, gegebenenfalls unter Zugabe eines oder mehrerer Lösungsmittel und gegebenenfalls weiterer antimikrobiell wirksamer Verbindungen miteinander vermischt.

Die Applikation der erfindungsgemäßen Mischungen kann, in Abhängigkeit von ihren jeweiligen physikalischen und/oder chemischen Eigenschaften, entweder separat in Form einer Zudosierung der Einzelwirkstoffe erfolgen, wobei je nach vorliegendem Konservierungsproblem eine individuelle Einstellung des Konzentrationsverhältnisses vorgenommen werden kann, oder es kann die Zudosierung einer fertigen Wirkstoffmischung erfolgen. Hierzu kann die erfindungsgemäße Mischung zuvor in eine übliche Formulierung wie z.B. in eine Lösung, Emulsion, Suspension, ein Pulver, Schäume, Pasten, Granulate, Aerosole und Feinstverkapselungen in polymeren Stoffen, überführt werden.

Diese Formulierungen können in an sich bekannter Weise hergestellt werden, z.B. durch Vermischen der erfindungsgemäßen Mischung oder darin enthaltenen Einzelwirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet

werden. Als flüssige Lösungsmittel kommen im wesentlichen infrage: Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid, N-Methyl-pyrrolidon oder Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Ligninsulfitablaugen und Polyacrylate.

Es können in den Formulierungen Haftmittel und Verdicker wie Carboxymethylcellulose, Methylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Gegenstand der vorliegenden Erfindung sind weiterhin mikrobizide Mittel auf Basis der erfindungsgemäßen Mischungen, enthaltend mindestens ein Lösungsmittel oder Verdünnungsmittel sowie gegebenenfalls Verarbeitungshilfsmittel und gegebenenfalls weitere antimikrobiell wirksame Stoffe.

Die zum Schutz von technischen Materialien verwendeten mikrobiziden Mittel oder formulierten Konzentrate enthalten die Wirkstoffe o-Phenylphenol und/oder dessen Natrium- oder Kaliumsalz und ein Amin der allgemeinen Formel (I), gerechnet als Summe beider Wirkstoffe, in einer Konzentration von 5 bis 80 Gew.-%, vorzugsweise 10 bis 60 Gew.-%.

Die Anwendungskonzentrationen der erfindungsgemäß zu verwendenden Wirkstoffkombinationen richten sich nach der Art und dem Vorkommen der zu bekämpfenden Mikroorganismen, der mikrobiellen Ausgangsbelastung, der zu erwartenden Lagerzeit der zu schützenden Produkte sowie nach der Zusammensetzung der mikrobiologisch anfälligen Endprodukte. Die optimale Einsatzmenge kann durch Vorversuche und Testreihen im Labormaßstab sowie durch ergänzende Betriebsversuche ermittelt werden. Im Allgemeinen liegen die Anwendungskonzentrationen im Bereich von 0,01 bis 5 Gew.-%, vorzugsweise von 0,02 bis 2,0 Gew.-% der erfindungsgemäßen Mischung, bezogen auf das zu schützende Material.

In den nachfolgenden Beispielen wird die überraschend hohe Wirksamkeit der erfindungsgemäßen Mischungen dokumentiert:

## Beispiele

Gegen bestimmte, insbesondere praxisrelevante Keime wie z.B. *Pseudomonas fluorescens* (Beispiel 1), zeichnen sich die erfindungsgemäßen Mischungen durch synergistische Effekte aus, d.h. die Wirksamkeit der Mischung ist besser als dies aus der Wirksamkeit der Einzelkomponenten abzuleiten wäre.

Der gefundene Synergismus der erfindungsgemäßen Mischungen lässt sich über folgenden mathematischen Ansatz ermitteln (vgl. F.C. Kull, P.C. Elisman, H.D. Sylwestrowicz and P.K. Mayer, Appl. Microbiol. 9, 538 (1961):

$$\text{synergistischer Index (SI)} = \frac{Q_a}{Q_A} + \frac{Q_b}{Q_B}$$

mit

$Q_a$ = Menge Komponente A in der Wirkstoffmischung, die den gewünschten Effekt, d.h. kein mikrobielles Wachstum, erzielt,

$Q_A$ = Menge Komponente A, die allein eingesetzt, das Wachstum der Mikroorganismen unterdrückt,

$Q_b$ = Menge Komponente B in der Wirkstoffmischung, die das Wachstum der Mikroorganismen unterdrückt,

$Q_b$ = Menge Komponente B, die allein eingesetzt, das Wachstum der Mikroorganismen unterdrückt.

Ein gemäß obiger Formel resultierender synergistischer Index von SI <1 zeigt für die Wirkstoffmischung einen synergistischen Effekt an.

Beispielhaft, ohne zu limitieren, wird anhand der nachfolgenden Berechnungen die synergistische Wirkungsverstärkung erläutert.

**Beispiel 1**

**Synergismus o-Phenylphenol (OPP) / Bis-(3-aminopropyl)-dodecylamin ("AMIN 1")**

Mit dem Testkeim *Pseudomonas fluorescens* wurden die minimalen Hemmkonzentration der in Tabelle 1 aufgeführten Wirkstoffkombinationen untersucht

**Tabelle 1**

| **Pseudomonas fluorescens** | | |
|---|---|---|
| | Menge der reinen Wirkstoffe, die das Wachstum unterdrücken (in ppm) | SI |
| A = OPP | 500 (=$Q_A$) | |
| B = "AMIN 1" | 50 (=$Q_B$) | |
| | Mengenanteile in den Wirkstoffmischungen, die das Wachstum unterdrücken (in ppm) | |
| OPP / "AMIN 1 "(9:1)* | ($Q_a$) = 90/ ($Q_b$) = 10 | 0,38 |
| OPP / "AMIN 1"(8:2)* | ($Q_a$) = 80/ ($Q_b$) = 20 | 0,66 |
| OPP / "AMIN 1"(7:3)* | ($Q_a$) = 70/ ($Q_b$) = 30 | 0,74 |
| OPP / "AMIN 1"(6:4)* | ($Q_a$) = 30/ ($Q_b$) = 20 | 0,46 |
| OPP / "AMIN 1 "(5:5)* | ($Q_a$) = 25/ ($Q_b$) = 25 | 0,55 |
| OPP / "AMIN 1"(4:6)* | ($Q_a$) = 20/ ($Q_b$) = 30 | 0,64 |
| OPP / "AMIN 1"(3:7)* | ($Q_a$) = 15/ ($Q_b$) = 35 | 0,71 |
| OPP / "AMIN 1"(2:8)* | ($Q_a$) = 10/ ($Q_b$) = 40 | 0,80 |
| OPP / "AMIN 1 "(1:9)* | ($Q_a$) = 90/ ($Q_b$) = 10 | 0,90 |
| * (In Klammern = Gewichtsverhältnisse der Wirkstoffe in der Mischung) | | |

Die erfindungsgemäßen Kombinationen weisen eine ausgeprägte synergistische Wirkung auf.

**Beispiel 2**

**Konservierung einer Kreideaufschlämmung**

Untersucht wurde die konservierende Wirkung eines erfindungsgemäßen Wirkstoff-gemischs in einer Kreideaufschlämmung anhand eines Konservierungsbelastungstests.

Mikrobiologischer Belastungstest

Mit dem mikrobiologischen Belastungstest wird die Anfälligkeit wasserbasierter Systeme gegen mikrobiellen Befall und die Wirkung von Konservierungsmitteln überprüft. Hierzu werden die Konservierungsmittel in definierten Konzentrationen in die wasserbasierten Systeme eingearbeitet. Zur Simulierung praxisnaher Bedingungen kann in Abhängigkeit vom zu prüfenden Medium vor der Durchführung des eigentlichen Konservierungsversuchs eine Lagerung bei erhöhten Temperaturen erfolgen (z.B. 7 Tage 40 °C , 3 Tage 60 °C o.ä.), um die zu prüfenden Konservierungsmittel unter möglichst realistischen Bedingungen bewertet zu bekommen. Nach Abschluss der Vorarbeiten erfolgt über einen Versuchszeitraum von maximal 6 Wochen eine Kontamination mit Mikroorganismen definierter Art im wöchentlichen

Abstand. 2-3 und 7 Tage nach jeder Kontamination wird durch Keimzahlbestimmung festgestellt, ob vollständige Abtötung oder zumindest Vermehrungshemmung der eingebrachten Bakterien im Vergleich zu den nicht konservierten Kontrollproben eingetreten ist.

Als Kontaminationsquelle wurde für den Belastungsversuch das folgende Mikroorganismengemisch für die Prüfung eingesetzt:

Pseudomonas aeruginosa

Pseudomonas fluorescens

Pseudomonas oleovorans

Pseudomonas rubescens

Pseudomonas stutzeri

Alcaligenes faecalis

Citrobacter freundii

Corynebacterium sp.

Eine sehr gute Wirksamkeit wird erreicht, wenn die konservierten Proben auch nach 6 Kontaminationszyklen eine Abtötung der eingebrachten Mikroorganismen bewirken. Eine befriedigende Wirkung liegt dann vor, wenn im Vergleich zur unkonservierten Probe ein stark reduziertes Mikrobenniveau beobachtet wird.

<u>Ergebnisse</u>

Mit einer Kreideaufschlämmung (70 - 75 % Feststoffanteil) wurde ein gemäß obigem Schema ablaufender Konservierungsbelastungstest durchgeführt. Nach Einarbeitung der jeweiligen bioziden Wirkstoffe in den angegebenen Konzentrationen wurden die Proben für 3 Tage bei 60 °C einer thermischen Belastung ausgesetzt. Anschließend wurden die so vorbehandelten Proben für die Durchführung des mikrobiologischen Belastungstests herangezogen

**<u>Tabelle</u>**

| **Biozide** **Dosierungen** | **Woche 1** | **Woche 2** | **Woche 3** | **Woche 4** | **Woche 5** | **Woche 6** |
|---|---|---|---|---|---|---|
| **o-Phenylphenol (OPP)** | | | | | | |
| **200 ppm** | ok | ok | ok | ok | verdorben | verdorben |
| **150 ppm** | ok | verdorben | verdorben | verdorben | verdorben | verdorben |
| **Bis-(3-aminopropyl)-dodecylamin ("Amin 1")** | | | | | | |
| **80 ppm** | ok | Verdorben | verdorben | verdorben | verdorben | Verdorben |
| **160 ppm** | ok | ok | ok | verdorben | verdorben | verdorben |
| **O Phenylphenol & "Amin 1"** | | | | | | |
| **OPP = 200 ppm & "Amin 1" = 80 ppm** | ok | ok | ok | ok | ok | ok |

Wie obiger Tabelle zu entnehmen ist, kann durch Zugabe des erfindungsgemäßen Gemischs aus o-Phenylphenol und Bis-(3-aminopropyl)-dodecylamin ("Amin 1") eine gegenüber den Einzelkomponenten signifikant verbesserte Wirkung erzielt werden, was zu einer insgesamt verbesserten Konservierungswirkung führt, indem das zu schützende Gut über den gesamten Zeitraum der 6-wöchigen Prüfdauer mit 6 konsekutiven Inokulationen in einem keimfreien

Zustand verbleibt.

## Patentansprüche

1. Mischung enthaltend o-Phenylphenol und/oder dessen Natrium- oder Kaliumsalz und mindestens ein Amin der allgemeinen Formel (I)

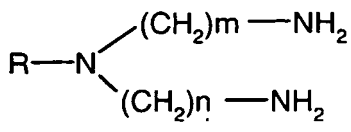

(I)

worin

R für ein geradkettiges oder verzweigtes Alkyl mit 8 bis 16 Kohlenstoffatomen steht,
m und n jeweils für eine ganze Zahl von 1 bis 11 stehen,

mit der Maßgabe, dass die Summe von n und m 4 bis 12 beträgt.

2. Mischung gemäß Anspruch 1, **dadurch gekennzeichnet, dass** mindestens ein Amin der Formel (I) enthalten ist, worin

R für ein geradkettiges oder verzweigtes Alkyl mit 10 bis 14 Kohlenstoffatomen steht, und
m und n jeweils für eine ganze Zahl von 1 bis 7 stehen,

mit der Maßgabe, dass die Summe von n und m 4 bis 8 beträgt.

3. Mischung gemäß wenigstens einem der Ansprüche 1 und 2, **dadurch gekennzeichnet, dass** ein Amin der Formel (I), worin R für Dodecyl steht und n und m für 3 stehen, enthalten ist.

4. Mischung gemäß wenigstens einem der Ansprüche 1 bis 3, **dadurch gekennzeichnet, dass** das Gewichtsverhältnis von o-Phenylphenol und/oder dessen Natrium- oder Kaliumsalz zum Amin der Formel (I) bei 99:1 bis 1:99 liegt.

5. Mikrobizides Mittel enthaltend eine Mischung gemäß wenigstens einem der Ansprüche 1 bis 4 und mindestens ein Hilfsmittel aus der Reihe der Lösungsmittel oder Lösungsmittelgemische, Streckmittel, oberflächenaktiven Verbindungen und gegebenenfalls weitere antimikrobielle wirksame Verbindungen.

6. Verwendung einer Mischung gemäß wenigstens einem der Ansprüche 1 bis 4 oder eines Mittels gemäß Anspruch 5 zum Schutz von technischen Materialien vor Befall und/oder Zerstörung durch Mikroorganismen.

7. Verwendung gemäß Anspruch 6, **dadurch gekennzeichnet, dass** es sich bei den technischen Materialien um wasserhaltige technische Produkte und wasserhaltige funktionelle Flüssigkeiten handelt.

8. Verfahren zur Herstellung eines Mittels gemäß Anspruch 5, **dadurch gekennzeichnet, dass** man o-Phenylphenol und mindestens ein Amin der Formel (I), gegebenenfalls unter Zugabe von Lösungsmitteln oder Lösungsmittelgemischen, Streckmitteln, oberflächenaktiven Mitteln und weiteren antimikrobiell wirksamen Verbindungen vermischt.

## Claims

1. Mixture comprising o-phenylphenol and/or its sodium or potassium salt and at least one amine of the general formula (I)

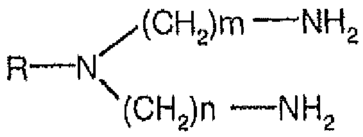 (I)

in which

R represents straight-chain or branched alkyl having 8 to 16 carbon atoms,
m and n each represent an integer of from 1 to 11,

with the proviso that the sum of n and m is from 4 to 12.

2. Mixture according to Claim 1, **characterized in that** it comprises at least one amine of the formula (I) in which

R represents straight-chain or branched alkyl having 10 to 14 carbon atoms, and
m and n each represent an integer of from 1 to 7,

with the proviso that the sum of n and m is from 4 to 8.

3. Mixture according to Claim 1 or 2, **characterized in that** it comprises an amine of the formula (I), in which R represents dodecyl and n and m represent 3.

4. Mixture according to at least one of Claims 1 to 3, **characterized in that** the weight ration of o-Phenylphenol and/or its sodium or potassium salt to the amine of the formula (I) is from 99:1 to 1:99.

5. Microbicidal composition, comprising a mixture according to at least one of Claims 1 to 4 and at least one auxiliary from the group of the solvents or solvent mixtures, extenders, surfactants and, if appropriate, further antimicrobially active compounds.

6. Use of a mixture according to at least one of Claims 1 to 4 or of a composition according to Claim 5 for protecting industrial materials against attack and/or destruction by microorganisms.

7. Use according to Claim 6, **characterized in that** the industrial materials are water-containing industrial products and water-containing functional fluids.

8. Process for preparing a composition according to Claim 5, **characterized in that** o-phenylphenol and at least one amine of the formula (I) are mixed, if appropriate with addition of solvents or solvent mixtures, extenders, surfactants and further antimicrobially active compounds.

## Revendications

1. Mélange contenant de l'o-phénylphénol et/ou son sel de sodium ou de potassium et au moins une amine de formule générale (I)

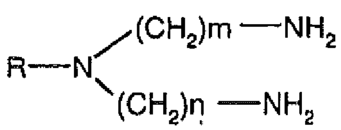 (I)

où

R représente un alkyle linéaire ou ramifié comprenant 8 à 16 atomes de carbone,
m et n valent à chaque fois un nombre entier de 1 à 11,

sous réserve que la somme de n et m vaut 4 à 12.

2. Mélange selon la revendication 1, **caractérisé en ce qu'**il contient au moins une amine de formule (I), dans laquelle

R représente un alkyle linéaire ou ramifié comprenant 10 à 14 atomes de carbone, et
m et n valent à chaque fois un nombre entier de 1 à 7,

sous réserve que la somme de n et m vaut 4 à 8.

3. Mélange selon au moins l'une quelconque des revendications 1 et 2, **caractérisé en ce qu'**il contient une amine de formule (I), dans laquelle R représente dodécyle et n et m représentent 3.

4. Mélange selon au moins l'une quelconque des revendications 1 à 3, **caractérisé en ce que** le rapport pondéral d'o-phénylphénol et/ou son sel de sodium ou de potassium à l'amine de formule (I) vaut 99:1 à 1:99.

5. Agent microbiocide contenant un mélange selon au moins l'une quelconque des revendications 1 à 4 et au moins un adjuvant de la série des solvants ou des mélanges de solvants, des diluants, des composés tensioactifs et le cas échéant d'autres composés actifs antimicrobiens.

6. Utilisation d'un mélange selon au moins l'une quelconque des revendications 1 à 4 ou d'un mélange selon la revendication 5 pour la protection de matériaux techniques contre l'attaque et/ou la dégradation par des microorganismes.

7. Utilisation selon la revendication 6, **caractérisée en ce qu'**il s'agit, pour les matériaux techniques, de produits techniques aqueux et de liquides fonctionnels aqueux.

8. Procédé pour la préparation d'un agent selon la revendication 5, **caractérisé en ce qu'**on mélange l'o-phénylphénol et au moins une amine de formule (I), le cas échéant avec addition de solvants ou de mélanges de solvants, de diluants, d'agents tensioactifs et d'autres composés actifs antimicrobiens.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 15025006 A
- WO 03061641 A


### In der Beschreibung aufgeführte Nicht-Patentliteratur


- **F.C. KULL ; P.C. ELISMAN ; H.D. SYLWESTROWICZ ; P.K. MAYER.** *Appl. Microbiol.,* 1961, vol. 9, 538